**Europäisches Patentamt**

**European Patent Office**

**Office européen des brevets**

(19)

(11) Veröffentlichungsnummer: **0 156 939**
**A1**

(12) # EUROPÄISCHE PATENTANMELDUNG

(21) Anmeldenummer: **84103731.0**

(22) Anmeldetag: **04.04.84**

(51) Int. Cl.⁴: **B 23 D 29/00**

(43) Veröffentlichungstag der Anmeldung: **09.10.85**
Patentblatt **85/41**

(84) Benannte Vertragsstaaten: **AT BE CH DE FR GB IT LI NL SE**

(71) Anmelder: **Mora Hydraulics AB, Box 233, S-792 01 Mora 1 (SE)**

(72) Erfinder: **Olsson, Lars-Uno, Fack 48, S-78 053 Nas (SE)**

(74) Vertreter: **Popp, Eugen, Dr. et al, Patentanwälte Popp, Sajda, v. Bülow, Hrabal & Partner Widenmayerstrasse 48 Postfach 86 06 24, D-8000 München 86 (DE)**

(54) **Druckmittelgesteuertes Werkzeug.**

(57) Druckmittelgesteuertes Werkzeug, mit ein Druckmittel-Schaltventil (16) umfassenden Druckmitteleinheit (19), die getrennt vom Werkzeug (15) aufstellbar ist. Die Druckmitteleinheit (19) steht über mindestens eine Druckmittelleitung (11, 12) sowie eine Fernsteuerung (10) mit dem Werkzeug (15) in Verbindung, wobei die Fernsteuerung am Werkzeug (15) eine Einrichtung (13, 14) zum Betätigen der Druckmitteleinheit (19) und damit des Werkzeuges (15) umfaßt. Das Werkzeug (15) umfaßt praktisch nur die unmittelbar auf das Werkstück einwirkenden Teile. Sämtliche Antriebs- und Schaltteile sind entfernt vom Werkzeug angeordnet.

Die Druckmitteleinheit ist gekennzeichnet durch eine Drucksteigerungseinrichtung (9), die schlagartig wirksam ist, sowie ggf. eine Druckmittel-Vibrationseinrichtung (Impulsgenerator 29).

## Druckmittelgesteuertes Werkzeug

## Beschreibung

Die Erfindung betrifft ein druckmittelgesteuertes Werkzeug, insbesondere eine hydraulisch angetriebene Schere, mit einer ein Reservoir für das Druckmittel, eine Druckmittelpumpe, einen Antrieb für die Druckmittelpumpe sowie ein Druckmittel-Schaltventil umfassenden Druckmitteleinheit.

Derartige Werkzeuge sind allgemein bekannt; sie sind jedoch unhandlich und damit an gefährlichen, z.B. hochexplosiven, Einsatzorten gefährlich in der Handhabung. Bei den bekannten Werkzeugen dieser Art bilden nämlich die Druckmitteleinheit sowie das eigentliche Werkzeug eine geschlossene bzw. dicht zusammenliegende Baueinheit mit der Folge, daß sich u.a. der Antrieb für die Druckmittelpumpe sowie die Energiequelle für den Antrieb in unmittelbarer Nähe des Einsatzortes befinden. Für den Einsatz an hochexplosiven Orten sind diese Baueinheiten daher nicht geeignet, ja sogar verboten. Sie würden sowohl dem Benutzer als auch die Umgebung in höchstem Grade gefährden. Die gewichtsbedingte Unhandlichkeit der bekannten Gerätschaften

0156939

machen darüber hinaus ihren Einsatz in unwegsamem Gelände praktisch unmöglich.

Der vorliegenden Erfindung liegt daher die Aufgabe zugrunde, ein Werkzeug der eingangs genannten Art zu schaffen, das handlich und gefahrlos in der Bedienung auch an hochexplosiven Einsatzorten ist.

Diese Aufgabe wird in überraschend einfacher Weise durch die im Kennzeichen des Anspruches 1 angegebene Anordnung gelöst. Die erfindungsgemäße Ausbildung hat sich bei Versuchen bestens bewährt. Sie eignet sich insbesondere für hydraulische Scheren, z.B. zum Aufschneiden der Fahrgasträume von abgestürzten Flugzeugen, umgestürzten Zügen oder anderen Fahrzeugen. In derartigen Beförderungsmitteln eingeklemmte Menschen lassen sich ohne durch das Bergungswerkzeug bedingte Explosionsgefahr bergen.

Die erfindungsgemäße Fernsteuerung, vorzugsweise in Form einer elektrische Signale übertragenden Steuerleitung, erlaubt es, die Druckmitteleinheit 100 m oder mehr vom eigentlichen Einsatzort für das Werkzeug aufzustellen. Die Druckmitteleinheit kann daher wirkungsvoll außerhalb des Gefahrenbereiches angeordnet werden. Sie kann auch praktisch trägheitsfrei von der das Werkzeug haltenden Person bedient werden. Die vorzugsweise verwendete elektrische Steuerleitung behindert aufgrund ihres geringen Gewichtes sowie geringen Platzbedarfes auch nicht die Handhabung des Werkzeuges in unwegsamem Gelände oder an schwer zugänglichen Einsatzstellen.

Die Fernsteuerung könnte auch durch Ultraschall, Infrarotlicht, elektromagnetische Wellen oder dergleichen erfolgen.

Von ganz wesentlicher Bedeutung ist auf jeden Fall, daß das Werkzeug selbst so leicht wie möglich gebaut ist, also keine Druckmittel-Schaltventile, dazugehörige Schalthebel oder zusätzliche Anschlüsse für Druckmittel-Steuerleitungen (Hydraulik- oder Luftschlauch) aufweist.

In den Unteransprüchen sind bevorzugte konstruktive Details des erfindungsgemäßen Werkzeuges näher beschrieben, wobei die Maßnahmen nach den Ansprüchen 5 bis 7 in Kombination mit den Maßnahmen nach den Ansprüchen 9 und 10 sich als besonders wirkungsvoll hinsichtlich der Werkzeugleistung herausgestellt haben.

Nachstehend wird eine besonders bevorzugte Ausführungsform der Erfindung anhand der beigefügten Zeichnung näher erläutert. Es zeigen:

Fig. 1  eine hydraulische Schere mit ferngesteuerter Druckmitteleinheit in schematischer Übersicht, und

Fig. 2  die hydraulische Schaltung für das Werkzeug nach Fig. 1.

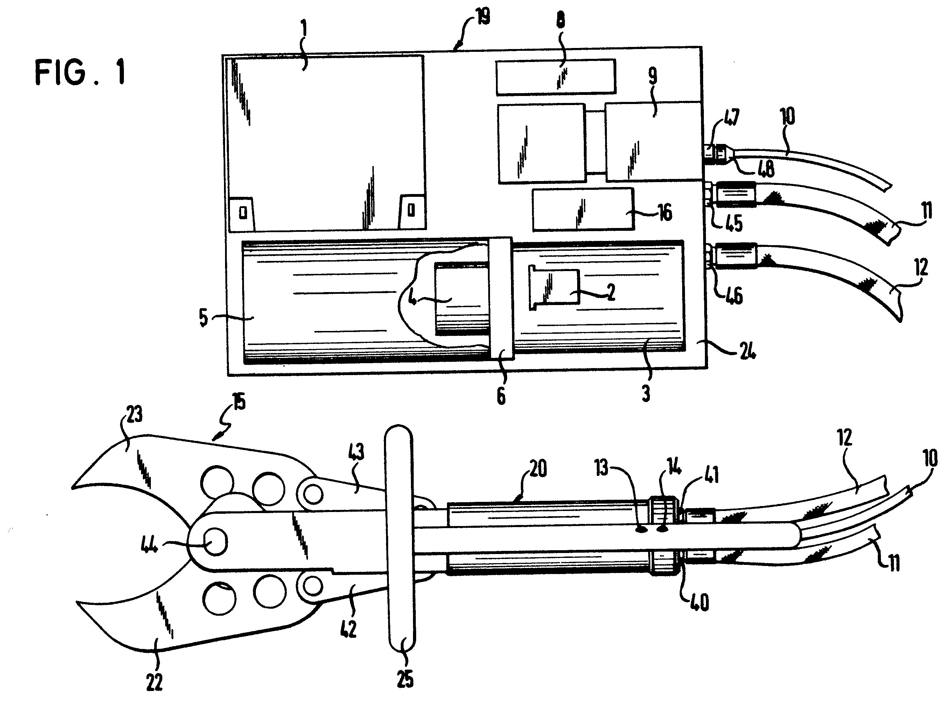

In Fig. 1 ist das druckmittelgesteuerte Werkzeug eine hydraulische Rettungsschere 15 mit zwei zangenartigen Scherenhälften 22, 23, einem Handgriff 25, zwei hydraulischen Anschlüssen 40, 41 für zwei Druckmittelleitungen 11, 12 und zwei Berührungsschaltern 13, 14, die mit einer elektrischen Steuerleitung 10 verbunden sind. Ferner umfaßt das Werkzeug 15 eine zweiseitig beaufschlagbare Kolben-Zylinder-Einheit 20, deren in Fig. 1 nicht sichtbar dargestellte Kolbenstange über zwei Koppelglieder (Lenker) 42, 43 mit den Scherenhälften 22, 23 in Wirkverbindung steht. Die Scherenhälften 22, 23 sind um eine gemeinsame Achse 44 schwenkbar gelagert.

In praktisch beliebiger Entfernung von dem Werkzeug 15 kann eine Druckmitteleinheit 19 aufgestellt werden, die im vorliegenden Fall eine Hydraulikeinheit ist und einen Rahmen 24 umfaßt, auf dem folgende Aggregate montiert sind:

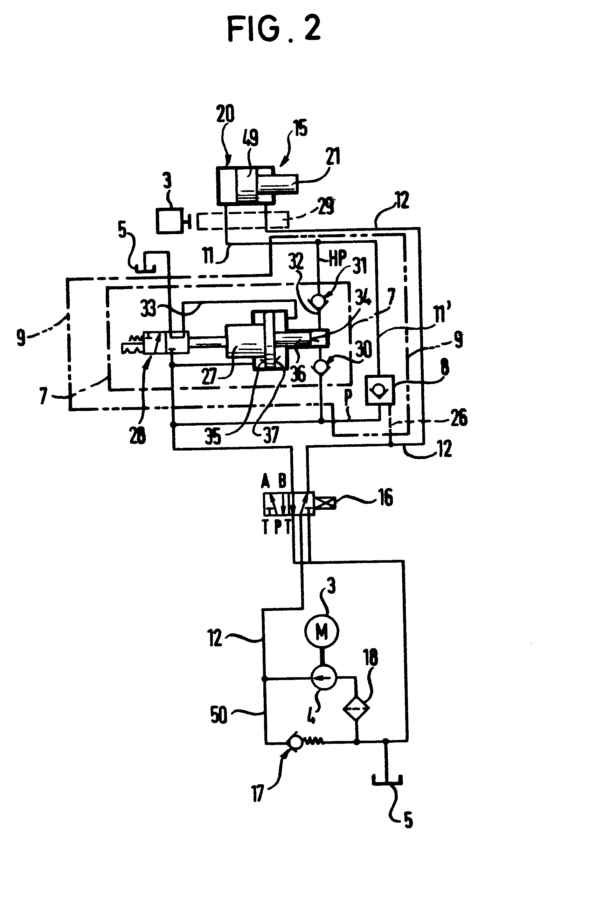

- Druckmittelpumpe 4,
- Motor 3 zum Antrieb der Druckmittelpumpe 4,
- Druckmittelreservoir bzw. -tank 5,
- Batterie 1,
- Drucksteigerungseinheit 9 mit einem noch zu beschreibenden Drucksteigerungsventil 7 (Fig. 2),
- druckgesteuertes Rückschlagventil 8,
- Druckmittel-Schaltventil (2-Wege-Ventil) 16 sowie
- Anschlüsse 45, 46 und 47 für die Druckmittelleitungen 11, 12 und elektrische Steuerleitung 10.

Die Druckmittelpumpe 4 und der Antriebsmotor 3 sind an einer aufrechten Montageplatte 6 angeschlossen, und zwar an den beiden gegenüberliegenden Seiten der Montageplatte 6. Die Druckmittelpumpe 4 befindet sich innerhalb des Druckmittelreservoirs bzw. -tanks 5, dessen eine Begrenzungswand die gemeinsame, im vorliegenden Fall aufrechte, Montageplatte 6 bildet. Die elektrische Verbindung zwischen der Batterie 1 und dem Antriebsmotor 3 umfaßt noch ein Schaltrelais 2, das durch die Berührungsschalter 13, 14 über die elektrische Steuerleitung 10 schaltbar ist. Gleichzeitig ist durch die Berührungsschalter 13, 14 das Druckmittel-Schaltventil 16 (Elektro-Magnet-Ventil) schaltbar. Bei der Batterie 1 handelt es sich z.B. um eine 12 Volt-Gleichstrombatterie.

Die Hydraulikanschlüsse 40, 41, 45 und 46 umfassen an sich bekannte Schlauch-Schnellkupplungen, die sich in der Pra- xis allgemein bewährt haben. Bei dem elektrischen Anschluß 47 kann es sich um eine an sich bekannte Steckverbindung handeln, die durch eine Schraubkappe 48 gesichert ist.

Auf dem Rahmen 24 kann auch noch ein hydraulischer Impulsgenerator angeordnet sein, mittels dem das Vorschub-Druckmittel für den Arbeitskolben in der Kolben-Zylinder-Einheit 20 in Teilströme unterteilt wird, so daß ein vibrierender Vorschub und damit eine vibrierende Zangenbewegung der beiden Scherenhälften 22, 23 erzielt wird. Der Impulsgenerator weist vorzugsweise einen in einem Gehäuse drehbar gelagerten, den Druckmittelstrom in pulsierende Teilströme unterteilenden Drehkolben auf, der bei Bedarf an den Motor 3 für die Druckmittelpumpe 4 ankuppelbar ist. Der Impulsgenerator könnte z.B. ebenfalls innerhalb des Tanks 5 angeordnet sein, und zwar an der dem Motor 3 abgewandten Seite der Druckmittelpumpe 4. Auf diese Weise wird die Kompaktheit der Hydraulikeinheit 19 nicht beeinträchtigt.

Anhand der Fig. 2 soll nun die Funktionsweise des in Fig. 1 schematisch dargestellten Werkzeuges näher erläutert werden, insbesondere die Zusammenwirkung zwischen dem elektromagnetischen 2-Wege-Ventil 16, der Drucksteigerungseinheit 9 und dem druckgesteuerten Rückschlagventil 8.

Die Darstellung nach Fig. 2 läßt erkennen, daß die Druckmittelleitung 12 in den von der Kolbenstange 21 des Arbeitskolbens 49 durchsetzten Zylinderraum der Kolben-Zylinder-Einheit bzw. des Arbeitszylinders 20 mündet, während die Druckmittelleitung 11 in den der Kolbenstange 21 abgewandten Zylinderraum führt.

Die Druckmittelleitung 11 umfaßt innerhalb der Drucksteigerungseinheit einen Niederdruckteil 11', in dem das bereits erwähnte druckgesteuerte Rückschlagventil 8 angeordnet ist, und einen parallel dazu geschalteten Hochdruckteil 32 mit einem reziprokierenden Drucksteigerungsventil 7. Die Drucksteuerung des Rückschlagventils 8 erfolgt durch den Druck in der Druckmittelleitung 12 über eine Drucksteuerleitung 26.

Das Drucksteigerungsventil 7 umfaßt einen Differentialkolben 27 mit einem konstanten Flächenverhältnis von z.B. 6,5 : 1. Mittels dieses Differentialkolbens ist bei erhöhtem Widerstand auf das Werkzeug und damit auf den Arbeitskolben 49 eine schlagartige Erhöhung des Arbeitsdruckes von z.B. 100 bar auf etwa 1400 bar möglich. Es wird dann der Hochdruckteil der Druckmittelleitung 11 wirksam. Nun im einzelnen zur hydraulischen Schaltung nach Fig. 2:

Bei der in Fig. 2 gezeichneten Schaltung des 2-Wege-Ventils 16 (Betätigung des Berührungsschalters 14 in Fig. 1) ist das reziprokierende Drucksteigerungsventil 7 wirkungslos, d.h. außer Funktion. Der Arbeitskolben 49 wird im Arbeitszylinder 20 in seine linke Ausgangsstellung verschoben (geöffnete Zangen- bzw. Scherenhälften 22, 23), wobei das druckgesteuerte Ventil 8 geöffnet ist. Die Öffnung dieses Ventils erfolgt durch den über die Druckmittelleitung 26 einwirkenden Druck. Durch das geöffnete Rückschlagventil 8 kann das Druckmittel aus dem der Kolbenstange 21 abgewandten Zylinderraum zurück in das Reservoir 5 strömen, und zwar über den Anschluß A des 2-Wege-Ventils 16.

Wird das 2-Wege-Ventil 16 durch Betätigung des Berührungsschalters 13 in Fig. 1 umgeschaltet, liegt die Pumpe 4 nicht mehr an der Druckmittelleitung 12, sondern an der Drucksteigerungseinheit 9. Dabei wirkt der Pumpendruck sowohl auf das druckgesteuerte Rückschlagventil 8, also auf den Niederdruckteil 11' der Druckmittelleitung 11, als auch auf dem reziprokierenden Drucksteigerungsventil 7, und zwar auf der Rückseite 35 des Differentialkolbens 27 sowie auf dem in Fig. 2 unteren Rückschlagventil 30 der parallel zum Ventil 8 angeordneten Hochdruckleitung 32. Der Differentialkolben 27 wird nach Umschaltung des 2-Wege-Ventils 16 demnach in Fig. 2 nach rechts bewegt, wodurch die Hochdruckleitung 32 gesperrt ist. Die Unterbrechung der Hochdruckleitung 32 erfolgt durch einen in diese hineinragenden Differentialkolbenfortsatz 36. Es baut sich dann über das druckgesteuerte Rückschlagventil 8 in dem der Kolbenstange 21 abgewandten Teil des Arbeitszylinders 20 ein Arbeitsdruck von z.B. 100 bar (Niederdruck) auf, mit dem der Arbeitskolben 49 bzw. die Kolbenstange 21 in Fig. 2 nach rechts verschoben wird. Durch diese Bewegung des Arbeitskolbens 49 bzw. der Kolbenstange 21 wird das Werkzeug mit dem zu bearbeitenden Gegenstand in Eingriff gebracht. Sofern der Widerstand am Werkzeug den Arbeitsdruck von 100 bar übersteigt, wirkt der dann erhöhte Pumpendruck über ein zusammen mit dem Differentialkolben 27 nach rechts bewegtes Schaltventil 28 sowie eine Verbindungsleitung 33 auf den Differentialkolben 27 derart ein, daß dieser in Fig. 2 schlagartig nach links verschoben wird und die Hochdruckleitung 32 freigibt. Die Druckmittelleitung 11 bzw. der Arbeitskolben 49 stehen dann schlagartig unter Hochdruck von z.B. bis zu etwa 1400 bar. Die in der Hochdruckleitung 32 angeordneten Rückschlagventile 30 und 31 sind in diesem Falle natürlich geöffnet. Das druckgesteuerte Rückschlagventil 8 im Niederdruckteil 11' ist dagegen geschlossen. Sollte es sich jedoch zufällig öffnen, so würde dadurch die Funktion nicht beeinträchtigt.

Wie oben bereits erwähnt ist, ist das Flächenverhältnis des Differentialkolbens 27 konstant und beträgt z.B. 6,5 : 1, wobei dieses Flächenverhältnis bestimmt ist durch die dem Differentialkolbenfortsatz 36 zugewandte Ringfläche 37 des Differentialkolbens 27 einerseits und die dem Differentialkolbenfortsatz 36 abgewandte Ringfläche des Differentialkolbens 27 andererseits. Bei geöffneter Hochdruckleitung 32 ist darüber hinaus auch noch die in Fig. 2 rechte Stirnfläche 34 des Differentialkolbenfortsatzes 36 hydraulisch wirksam.

Der Fig. 2 kann schließlich noch entnommen werden, daß zwischen Reservoir 5 und Pumpe 4 noch ein Druckmittelfilter 18 vorgesehen ist. Ferner zweigt von der Druckmittelleitung 12 zum Reservoir 5 noch eine Überdruckleitung 50 ab, in der sich ein Rückschlagventil 17 befindet, das bei einem Druck von z.B. über 100 bar öffnet. Auf diese Weise ist sichergestellt, daß der Arbeitskolben 49 maximal mit einem Druck von etwa 100 bar in die Ausgangsstellung zurückgeführt wird bzw. das damit gekoppelte Werkzeug geöffnet wird.

Der elektrische Teil der Hydraulikeinheit 19 umfaßt vorzugsweise noch einen elektrischen Anschluß zum Laden der Batterie 1 (Akkumulator) sowie einen Anschluß für ein elektrisch betriebenes Werkzeug oder eine Beleuchtungseinheit. Ferner ist eine Einrichtung zum Schutz vor einer Überladung des Akkumulators vorgesehen.

Besonders wirkungsvoll arbeitet das Werkzeug in Kombination mit einem hydraulischen Impulsgenerator, der in Fig. 2 schematisch dargestellt und mit der Bezugsziffer 29 gekennzeichnet ist und der an den Motor 3 bei Bedarf ankoppelbar ist.

Der Impulsgenerator umfaßt vorzugsweise ein Gehäuse mit einem drehbar gelagerten, den vom Hochdruckteil 32 kommenden Druckmittelstrom in pulsierende Teilströme unterteilenden Drehkolben, der in einfacher Weise an den Motor 3 ankuppelbar ist. Statt eines Drehkolbens kann auch ein Axialkolben vorgesehen sein, mittels dem z.B. zwei Auslaßöffnungen abwechselnd verschlossen werden, während die Einlaßöffnung ständig offen ist. Durch die Erzeugung pulsierender Teilströme erhält man einen vibrierenden Vorschub des Arbeitskolbens 49 bzw. der Kolbenstange 21, wodurch die Werkzeugleistung erheblich erhöht werden kann bei vergleichsweise niedrigeren Drücken. Die Frequenz des den Vorschub bewirkenden Druckmittels kann sehr leicht variiert werden durch ein zwischen Motor 3 und Impulsgenerator 29 angeordnetes Getriebe (mit vorbestimmten Getriebestufen oder stufenlos).

Bei einer anderen Ausführungsform ist der Impulsgenerator so ausgebildet, daß das Druckmittel in unterschiedlichen Mengen abwechselnd auf jeder Seite des Arbeitskolbens 49 in den Arbeitszylinder eingeführt und abgeführt wird. Bei Bei dieser Ausführungsform ist vorteilhaft, daß das Werkzeug nicht nur vibrierend geschlossen werden kann, sondern daß es auch auf der Stelle vibriert und vibrierend geöffnet werden kann, wenn es beim Öffnen klemmen sollte. Der Impulsgenerator teilt den von der Hochdruckleitung 32 kommenden Druckmittelfluß in zwei zeitlich abwechselnde Speiseflüsse auf und leitet den einen aufgeteilten Speisefluß in den der Kolbenstange 21 abgewandten Zylinderraum und den anderen aufgeteilten Speisefluß in den von der Kolbenstange 21 durchsetzten Zylinderraum des Arbeitszylinders 20 ein bzw. aus diesen Öffnungen wieder in den Impulsgenerator und von da unmittelbar in das Reservoir 5 zurück. Zur Rückführung des Druckmittels kann die Leitung 12 dienen. Der Impulsgenerator besteht dabei vorzugsweise aus einem Druckzylinder und einem darin drehbar angeordneten und axial verschiebbaren Kolben. Der Druckzylinder weist Ein- und Auslaßöffnungen für den Anschluß der Druckmittelleitungen 11 und 12 auf, sowie zwei im Abstand voneinander und beispielsweise um 90° versetzt angeordnete Auslaßöffnungen für den Anschluß der zu den beiden Teilzylinderräumen des Arbeitszylinders 20 führenden Druckmittelleitungen. Der in dem Druckzylinder drehbar gelagerte Kolben ist mittels einer Schiebeklaue axial verschiebbar. Diese axiale Verschiebbarkeit dient dazu, den Querschnitt der Auslaßöffnungen zu regeln. Dadurch ist die Stellung des Arbeitskolbens in dem Arbeitszylinder einstellbar und entsprechend die Druckmittelmengen, die abwechselnd in die beiden Teilzylinderräume des Arbeitszylinders 20 eingeleitet werden.

Der Drehkolben weist z.B. an seiner Umfangsfläche an einem Ende eine Ringnut auf, die in jeder Kolbenstellung mit der Hochdruckleitung 32 kommuniziert. Diese Ringnut ist durch eine achsparallele Bohrung mit z.B. einer achsparalleln Aussparung verbunden, die in die Umfangsfläche des Kolbens eingearbeitet ist und die beiden im Abstand voneinander versetzt angeordneten Auslaßöffnungen, die zu den beiden Seiten des Arbeitszylinders 20 führen, wechselnd mit Druckmittel beschickt.

Die Drehbewegung des Drehkolbens kann eine fortlaufende Drehbewegung sein, es kann aber auch eine Pendelbewegung sein.

Sämtliche in den Anmeldungsunterlagen offenbarten Merkmale werden als erfindungswesentlich beansprucht, soweit sie einzeln oder in Kombination gegenüber dem Stand der Technik neu sind.

Druckmittelgesteuertes Werkzeug

Patentansprüche

1. Druckmittelgesteuertes Werkzeug, insbesondere hydraulisch angetriebene Schere, mit einer ein Reservoir für das Druckmittel, eine Druckmittelpumpe, einem Antrieb für die Druckmittelpumpe sowie ein Druckmittel-Schaltventil umfassenden Druckmitteleinheit, d a d u r c h   g e k e n n z e i c h n e t ,  daß die Druckmitteleinheit (Hydraulikeinheit 19) vom Werkzeug (15) entfernt angeordnet und über mindestens eine Druckmittelleitung (11, 12) sowie eine Fernsteuerung (elektrische Steuerleitung 10) mit diesem in Verbindung steht, wobei die Fernsteuerung am Werkzeug (15) eine Einrichtung (13, 14) zum Betätigen der Druckmitteleinheit und damit des Werkzeuges umfaßt.

2. Werkzeug nach Anspruch 1, d a d u r c h   g e - k e n n z e i c h n e t ,  daß die Druckmittelverbindung zwischen der Druckmitteleinheit (19) und dem Werkzeug (15) durch zwei Druckmittelleitungen (11, 12) gebildet ist, die an einem 2-seitig beaufschlagbaren Arbeitszylinder (20) angeschlossen sind, dessen Arbeitskolben (21) in an sich bekannter Weise mit mindestens
einem der auf ein Werkstück einwirkenden Werkzeugteile (z.B. Scheren- oder Zangenhälften 22, 23) wirkverbunden ist.

3. Werkzeug nach Anspruch 1 oder 2, d a d u r c h
g e k e n n z e i c h n e t , daß mittels der Fernsteuerung, vorzugsweise in Form einer elektrische Signale übertragenden Steuerleitung (10), ein in der bzw.
den Druckmittelleitungen (11, 12) angeordnetes, eine
Änderung der Strömungsrichtung bewirkendes Schaltventil (2-Wege-Ventil 16) umschaltbar ist.

4. Werkzeug nach einem der Ansprüche 1 bis 3, d a -
d u r c h g e k e n n z e i c h n e t , daß die
Durckmitteleinheit (19) eine Hydraulikeinheit ist mit
einem Rahmen (24), der eine gemeinsame Montageplatte
(6) für die Druckmittelpumpe (4) und einen Motor (3)
zum Antrieb derselben umfaßt, wobei Druckmittelpumpe
(4) und Motor (3) an den beiden gegenüberliegenden
Seiten der Montageplatte (6) angeschlossen sind und
wobei die Druckmittelpumpe (4) sich vorzugsweise in
an sich bekannter Weise innerhalb des Druckmittelreservoirs bzw. -tanks (5) befindet, dessen eine Begrenzungswand die gemeinsame Montageplatte (6) bildet.

5. Werkzeug nach einem der Ansprüche 1 bis 4, d a -
d u r c h g e k e n n z e i c h n e t , daß dem
Arbeitszylinder (20) ein Impulsgenerator (29) vorgeschaltet ist, mittels dem das den Vorschub bewirkende
Druckmittel vibrierend in den der Kolbenstange (21)
abgewandten Teil des Arbeitszylinders (20) einleitbar
ist, während der andere Teil des Arbeitszylinders (20)
mit dem Reservoir (5) in Fluidverbindung steht.

0156939

6. Werkzeug nach einem der Ansprüche 1 bis 4, d a -
d u r c h   g e k e n n z e i c h n e t , daß dem
Arbeitszylinder (20) ein Impulsgenerator (29) vorgeschaltet ist, mittels dem das den Vorschub bewirkende
Druckmittel abwechselnd auf jeder Seite des Arbeitskolbens in den Arbeitszylinder (20) ein- und abführbar, wobei beim Vorschub in den der Kolbenstange (21)
abgewandten Zylinderraum bei jedem Impuls etwas mehr
Druckmittel eingeleitet wird als in den der Kolbenstange (21) zugewandten Zylinderraum bei jedem nächstfolgenden Impuls.

7. Werkzeug nach Anspruch 5 oder 6, d a d u r c h
g e k e n n z e i c h n e t , daß mittels des Impulsgenerators das Werkzeug (15) bzw. das oder die einwirkenden Werkzeugteile (22, 23) mit einer Frequenz von
etwa 1500 bis 6500 Hz, vorzugsweise etwa 3500 - 4500
Hz, beaufschlagbar sind.

8. Werkzeug nach einem der Ansprüche 5 bis 7, d a -
d u r c h   g e k e n n z e i c h n e t , daß der
Impulsgenerator einen in einem Gehäuse drehbar gelagerten, den Druckmittelstrom in pulsierende Teilströme
unterteilenden Drehkolben aufweist, der bei Bedarf an
den Motor (3) für die Druckmittelpumpe (4) ankuppelbar ist.

9. Werkzeug nach einem der Ansprüche 1 bis 8, d a -
d u r c h   g e k e n n z e i c h n e t , daß in
der zu dem der Kolbenstange (21) abgewandten Zylinderraum führenden Druckmittelleitung (11) ein druckgesteuertes Rückschlagventil (8) angeordnet ist, wobei
die Steuerung durch den in der zu dem von der Kolbenstange (21) durchsetzten Zylinderraum führenden Druckleitung (12) herrschenden Druck erfolgt (Drucksteuerleitung 26).

10. Werkzeug nach Anspruch 9, d a d u r c h    g e - k e n n z e i c h n e t , daß parallel zu dem druckgesteuerten Rückschlagventil (8) ein reziprokierendes Drucksteigerungsventil (7) angeordnet ist, das einen mit einem Umschaltventil (28) gekoppelten Steuerkolben (27) umfaßt, der als Differentialkolben ausgebildet ist und nach Anstieg des Vorschubdrucks über das Rückschlagventil (8) auf etwa 80 bis 120 bar im wesentlichen schlagartig eine das Rückschlagventil (8) überbrückende Verbindungsleitung (32) freigibt, so daß der volle Pumpendruck (bis zu etwa 1400 bar) auf den Arbeitskolben einwirken kann.

11. Werkzeug nach einem der Ansprüche 4 bis 10, d a - d u r c h   g e k e n n z e i c h n e t , daß im Rah- men (24) der Hydraulikeinheit (19) noch angeordnet sind eine Batterie (1), vornehmlich zum Antrieb des Motors (3), ein zwischen Tank (15) und Pumpeneinlaß angeordnetes Druckmittelfilter (18), das druckgesteuerte Rückschlagventil (8), das 2-Wege-Ventil (16) und eine das reziprokierende Drucksteigerungsventil (7) umfassende Drucksteigerungseinheit (9).

FIG . 1

0156939

1/2

2/2

# FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD-A- 51 754 (MINOW) <br> * Insgesamt * | 1-4 | B 23 D 29/00 |
| X | FR-A-1 161 873 (KELLERMANN) | 1 | |
| X | FR-A-1 161 872 (KELLERMANN) | | |
| X | NL-A-7 900 219 (PROWECO) | 1,5-8 | |
| A | US-A-3 382 669 (BAUER) | | |
| A | DE-A-2 910 544 (WOLTER) | | |

RECHERCHIERTE SACHGEBIETE (Int. Cl.4)

B 23 D
F 15 B

Der vorliegende Recherchenbericht wurde für alle Patentansprüche erstellt.

| Recherchenort <br> DEN HAAG | Abschlußdatum der Recherche <br> 27-12-1984 | Prüfer <br> BERGHMANS H.F. |
|---|---|---|